**Europäisches Patentamt**

**European Patent Office**

**Office européen des brevets**

(19)

(11) Veröffentlichungsnummer: **0 057 887**

**A2**

(12) # EUROPÄISCHE PATENTANMELDUNG

(21) Anmeldenummer: **82100678.0**

(22) Anmeldetag: **01.02.82**

(51) Int. Cl.³: **B 65 D 77/18**

(30) Priorität: **09.02.81 DE 3104453**

(43) Veröffentlichungstag der Anmeldung:
**18.08.82 Patentblatt 82/33**

(84) Benannte Vertragsstaaten:
**AT BE CH DE FR GB IT LI LU NL SE**

(71) Anmelder: **Henkel Kommanditgesellschaft auf Aktien**
**Postfach 1100 Henkelstrasse 67**
**D-4000 Düsseldorf 1(DE)**

(72) Erfinder: **Künzel, Werner**
**Eichenfeldstrasse 65**
**D-4018 Langenfeld(DE)**

(72) Erfinder: **Vierkötter, Peter**
**Sperberweg 7**
**D-5090 Leverkusen(DE)**

(72) Erfinder: **Meyer, Klaus**
**Marienburger Strasse 7**
**D-4019 Monheim(DE)**

(54) **Beutelverschluss.**

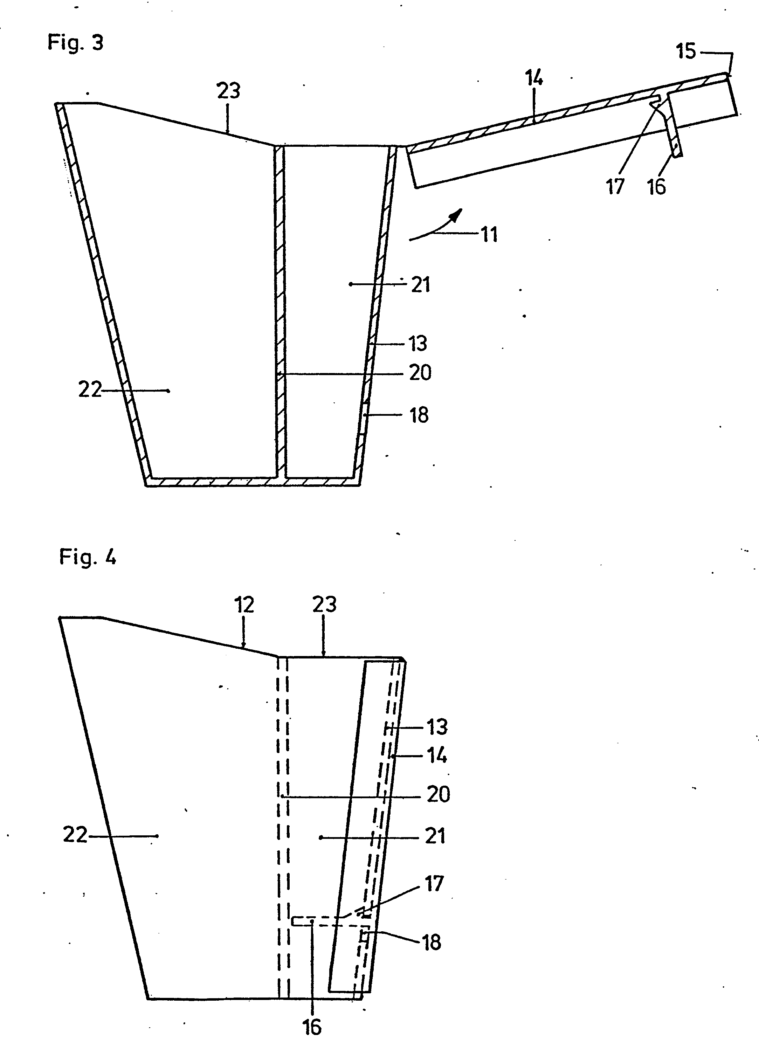

(57) Der Beutelverschluß besteht aus einer auf dem zusammengerafften Beutelhals zu setzenden Klammer mit zwei zangenartig gegeneinander zu bewegenden sowie durch ein Scharnier (4) zusammengehaltenen Klemmbacken (13, 14). Die Klammer ist kindergesichert wiederverschließbar, wenn die Klemmbacken (13, 14) mit Abstand von dem Scharnier (4) eine beim Schließen einrastende und durch Druck in eine etwa senkrecht zur Öffnungsrichtung (11) verlaufenden Richtung (10) zu öffnende Arretierung (17, 18) aufweisen. Die eine Klemmbacke (13) kann ein Seitenwandteil eines Meßbechers (12) bilden (Fig. 3).

Fig. 1

EP 0 057 887 A2

**0057887**

HENKEL-KGaA
ZR-FE/Patente
Bor/C

P a t e n t a n m e l d u n g

D 6315 EP )

"Beutelverschluß"

Die Erfindung betrifft einen Beutelverschluß, bestehend aus einer auf den zusammengerafften Beutelhals zu setzenden Klammer mit zwei zangenartig gegeneinander zu bewegenden sowie durch ein Scharnier an einer Klammerschmalseite zusammengehaltenen Klemmbacken. Vorzugsweise betrifft die Erfindung einen Verschluß für einen in eine Trommel zu setzenden, insbesondere zur Aufnahme eines pulverförmigen Reinigungsmittels vorgesehenen, Beutel.

Beutel zum Verpacken pulverförmiger Reinigungsmittel werden häufig in eine - in der Regel gesondert zu verschließende - Trommel gesetzt und innerhalb derselben mit einer Klammer bzw. einem sogenannten Klipp verschlossen. Für den Fall, daß im Beutel enthaltene gefährliche Füllgüter gegenüber Kindern besonders gefährdeter Altersgruppen entgegen der Gebrauchsabsicht unzugänglich gemacht werden sollen, sind Kindersicherungen für den wiederverschließbaren Trommeldeckel bereits vorgeschlagen worden. Da solche kindergesicherten Trommeldeckel relativ umständlich zu handhaben sind, besteht die Gefahr, daß der Verbraucher den Deckel nach dem ersten Öffnen gar nicht mehr benutzt sondern lediglich den das jeweilige Produkt unmittelbar enthaltenden Beutel selbst mit einem mitgelieferten Klipp verschließt. Auch, wenn aber der Beutel auf diese Weise ordnungsgemäß wieder verschlossen wird, stellt ein herkömmlicher Klipp

**0057887**
HENKEL KGaA
ZR-FE/Patente

D 6315 EP                    2

in keiner Weise einen Schutz gegenüber dem Zugriff für Kinder dar, da sich übliche Klammern leicht öffnen lassen.

Der Erfindung liegt die Aufgabe zugrunde, eine als Beutelverschluß geeignete Klammer zu schaffen, die im Sinne der entsprechenden Norm als kindergesichert und wiederverschließbar anzusehen ist. Die erfindungsgemäße Lösung besteht bei dem Beutelverschluß mit zwei zangenartig gegeneinander zu bewegenden sowie durch ein Scharnier zusammengehaltenen Klemmbacken im Prinzip darin, daß die Klemmbacken mit Abstand von dem Scharnier eine beim Schließen der Klammer einrastende und durch Druck in einer etwa senkrecht zur Öffnungsrichtung verlaufenden Richtung zu öffnende Arretierung aufweisen.

Durch die Erfindung wird erreicht, daß die den Beutelverschluß bildende, vorzugsweise langgestreckte, Klammer nur zu öffnen ist, indem praktisch gleichzeitig ein Druck in einer Richtung senkrecht zur Drehachse des Scharniers, d.h. insbesondere in der Klammer-Längsrichtung, und durch Zug in der Öffnungsrichtung zu öffnen ist. Eine zusätzliche Sicherung im Sinne eines kindergesicherten Verschlusses wird erzielt, wenn die zum Öffnen der Arretierung zu umgreifende Länge der Klammer die durchschnittliche Spannweite und/oder die dabei aufzubringende Kraft die durchschnittli-che Kraft der Hand eines bis zu etwa vier Jahren alten Kindes, d.h. eines Kindes im besonders gefährdeten Alter, übersteigt. Die Richtung der zum Öffnen der Sicherung erforderlichen Kraft verläuft dabei von außen nach innen etwa radial Scharnierdrehachse zu.

0057887

HENKEL KGaA
ZR-FE/Patente

D 6315 EP                    3

Der erfindungsgemäße Beutelverschluß kann aus einer Kunststoffklammer mit einem Scharnier und einer diesem gegenüberliegenden Arretierung bestehen. Zum Schließen kann die Klammer zangenartig so zusammengedrückt werden, daß sie an einer Stelle, zum Beispiel gegenüber dem Scharnier, einrastet. Durch Umfassen der Klammer in ihrer Längsrichtung und Druckausübung auf den Arretierungsbereich ausgeübt läßt sich die Klammer öffnen. Die Funktion der Kindersicherung wird im letzteren Falle also gewährleistet durch den Kraftaufwand beim Drücken und/oder durch die Länge der Klammer bzw. Klemmbacken in Abhängigkeit von der Spannweite einer Kinderhand bis zur Grenze des gefährdeten Alters von etwa 42 bis 51 Monaten.

Beim Verschließen eines Beutels wird dieser in seinem oberen, offenen Bereich in die geöffnete, erfindungsgemäße Klammer zwischen Scharnier und Arretierung gelegt und die Klemmbacken dann bis zum Einrasten der Arretierung zugedrückt. Dabei können die das beispielsweise aus Polyäthylen bestehende Material des Beutels umfassenden Teile bzw. Backen der Klammer einseitig oder doppelseitig an ihren Berührungskanten gezahnt oder auf andere Art griffig ausgebildet sein, wobei Ober- und Unterteil der Klammerkanten teilweise ineinandergreifen können. Ein mit einer solchen, arretierten Klammer umfaßter Beutelhals läßt sich ohne gewaltsame Zerstörung nicht aus dem Verschluß herausziehen. Ein zusätzlicher Vorteil des erfindungsgemäßen Verschlusses besteht also darin, daß auch ein versehentliches Öffnen der Klammer oder eine Lockerung der Verbindung zwischen Klammer und Beutelhals wegen der Arretierung nicht auftreten können.

Gemäß weiterer Erfindung können eine oder beide Backen des Verschlusses als Schalen, insbesondere mit vorgegebenem Dosiervolumen, ausgebildet sein. Bei der Dosenform läßt sich die Klammer im geöffneten Zustand zum Schöpfen und Dosieren des jeweils im Beutel enthaltenen Produkts verwenden. Der der Packung normalerweise beigegebene Meßbecher kann dann entfallen. Beispielsweise die eine Halbschale der geöffneten Klammer als Schaufel und die andere als deren Griff ausgebildet bzw. zu verwenden sein. Der erfindungsgemäße Beutelverschluß ist also ohne besonderen Aufwand gezielt als Zugabeartikel der jeweiligen Packung zu verwenden.

Eine im vorstehenden Sinne besonders günstige und die Sicherheitsforderung außerordentlich gut erfüllende Ausbildung des Beutelverschlusses ergibt sich, wenn gemäß noch weiterer Erfindung die Außenseite der einen Klemmbacke ein Seitenwandteil eines Meßbechers bildet und dabei das Scharnier im Bereich einer Kante der Becheröffnung an den Körper des Meßbechers angesetzt ist. Insbesondere soll hierbei der Meßbecher zwei durch eine in etwa parallel zu der als feste Klemmbacke ausgebildeten Seitenwand verlaufenden Trennwand abgeteilte Kammern aufweisen, und es soll die an die feste Klemmbacke angrenzende Kammer im Bodenbereich eine durch die äußere Seitenwand führende Öffnung zum Eintauchen oder Einrasten eines an die andere bzw. schwenkbare Klemmbacke angesetzten Querstegs besitzen. Die Kindersicherung wird dabei besonders wirksam, wenn die mit der Öffnung für den Quersteg ausgestattete Kammer eine solche Tiefe und Weite besitzt, daß ein Finger eines bis zu vier Jahre alten Kindes nicht an den in die

D 6315 EP 5

Kammer hineinragenden Quersteg heranreicht, aber der
Quersteg mit dem Finger einer Erwachsenenhand zu betätigen bzw. auszuklinken ist.

Anhand der schematischen Darstellung eines Ausführungsbeispiels wird die Erfindung näher erläutert. Es zeigen:

Fig. 1    einen Beutelverschluß in perspektivischer Ansicht;

Fig. 2    einen Längsschnitt durch den Verschluß nach
          Fig. 1;

Fig. 3    einen Längsschnitt durch einen Beutelverschluß
          mit angesetztem Meßbecher;

Fig. 4    den Verschluß nach Fig. 3 mit eingerasteter
          Klappe;

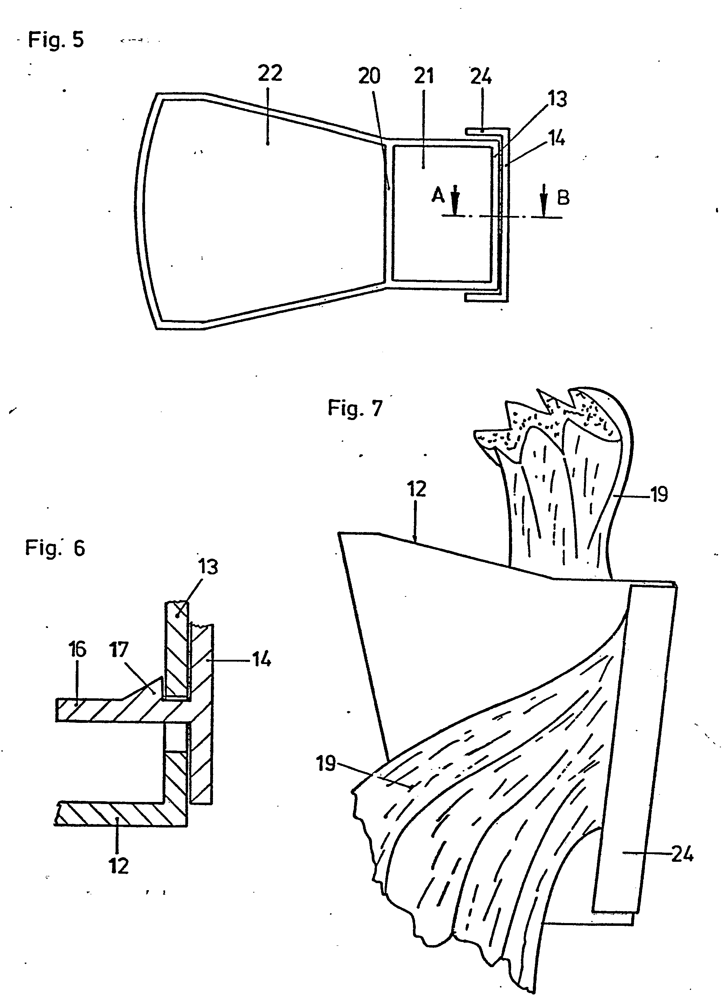

Fig. 5    einen Querschnitt durch die Anordnung nach
          Fig. 4;

Fig. 6    einen Schnitt längs der Linie A-B von Fig. 5;

Fig. 7    einen Verschluß mit eingeklemmtem Beutel;

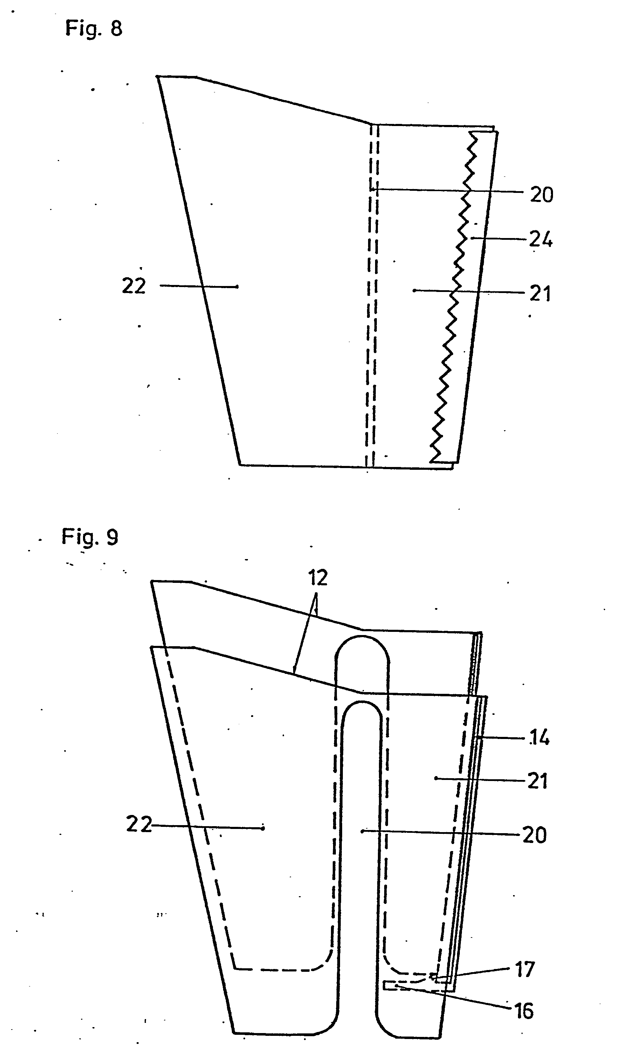

Fig. 8    einen Verschluß mit einer Klemmbacke mit gezahntem Rand; und

Fig. 9    ineinanderzustapelnde Meßbecher mit angesetztem
          Beutelverschluß.

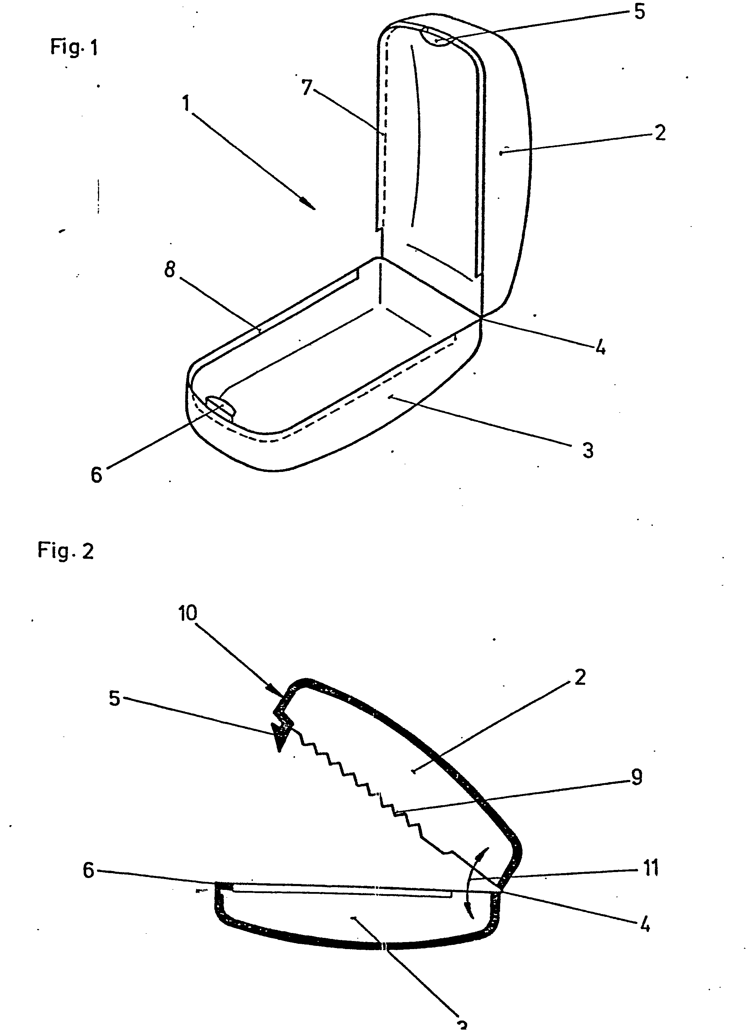

Der in den Fig. 1 und 2 insgesamt mit 1 bezeichnete Beutel-verschluß besteht aus zwei Halbschalen oder Backen
2 und 3, die über ein Scharnier 4 schwenkbar zusammengehalten werden und mit Hilfe einer dem Scharnier 4 gegenüberliegenden Arretierung, die aus den ineinandergreifenden Teilen 5 und 6 besteht, unverrückbar miteinander zu verbinden sind. Beim Ineinandergreifen der
Teile 5, 6 der Arretierung werden die Berührungskanten
7,8 der Klemmbacken 2, 3 einander so fest zugeordnet,
daß zwischen ihnen der nicht gezeichnete zusammengeraffte Hals eines zu verschließenden Beutels praktisch unverrückbar festgeklemmt wird. Die Klemmbacken können dabei - wie in Fig. 2 mit 9 angedeutet - gezahnt sein.

Die erfindungsgemäß als Kindersicherung vorgesehene
Arretierung 5, 6 ist im Ausführungsbeispiel so ausgebildet, daß sie durch Druck in Pfeilrichtung 10, d.h.
durch Druck senkrecht zur Längsrichtung des Scharniers
4, zu öffnen ist. Zum Öffnen muß gleichzeitig eine Relativbewegung der Klemmbacken 2, 3 in Öffnungs- bzw.
Umfangsrichtung 11 des Scharniers 4 ausgeführt werden.
Zum Öffnen der Kindersicherung sind daher zwei gleichzeitige Bewegungen in verschiedenen Richtungen erforderlich. Die Sicherungswirkung kann noch erhöht werden,
wenn die Länge des Scharniers, d.h. der Abstand zwischen
Arretierung 5, 6 und Scharnier 4 so groß gemacht wird,
daß sie die Spannweite einer Kinderhand des gefährdeten
Alters übersteigt. Zusätzlich oder alternativ kann auch
die zum Öffnen der Arretierung 5, 6 erforderliche Kraft
so groß bemessen werden, daß ein Kind des gefährdeten
Alters diese Kraft normalerweise nicht aufbringt.

Bei einem anhand der Fig. 3 bis 9 beschriebenen Ausführungsbeispiel wird eine mit einem insgesamt mit 12
bezeichneten Meßbecher integrierte feste Klemmbacke 13
einer schwenkbaren Klemmbacke 14 gegenübergestellt. Die
Klammer 1 von Fig. 1 und 2 wird also Bestandteil eines
Meßbechers 12. Die feste Klemmbacke 13 bildet dabei im
wesentlichen zugleich eine Seitenwand des Meßbechers 12.
Das Scharnier 4, bei dem es sich um ein Filmscharnier
handeln kann, wird vorzugsweise im Bereich einer Kante
der Becheröffnung an den Meßbecher 12 angesetzt. Zweckmäßig sitzt das Scharnier 4 der Schüttkante des Meßbechers

HENKEL KGaA
ZR-FE/Patente

Patentanmeldung

D 6315 EP;          8

12 gegenüber, um beim Schütten nicht zu stören. Die schwenkbare Klemmbacke 14, die auch als angelenkte Klappe zu bezeichnen ist, besitzt vorzugsweise im Bereich ihres freien Längsendes 15 einen Quersteg 16 mit Arretierungsnase 17. Der Quersteg 16 mit angesetzter Arretierungsnase 17 wird so ausgebildet, daß er in eine Öffnung 18 eintauchen und einrasten kann, welche in der der festen Klemmbacke 13 entsprechenden Seitenwand des Meßbechers 12 vorzusehen ist. Die eingerastete Stellung ist für die Gesamtansicht des Querschnitts in Fig. 4 und als Ausschnitt in Fig. 6 schematisch dargestellt. Ein Schnitt senkrecht zur Darstellung von Fig. 4 wird in Fig. 5 gezeigt. Aus Fig. 7 geht hervor, wie ein Beutel, zum Beispiel aus Polyäthylen, durch Einrasten der schwenkbaren Klemmbacke 14 zu verschließen und mit dem Meßbecher 12 zu verbinden ist.

Im Ausführungsbeispiel weist der Meßbecher 12 zwei durch eine in etwa parallel zu der als Klemmbacke 13 ausgebildeten Seitenwand verlaufende Trennwand 20 abgeteilte Kammern 21, 22 auf . Dabei soll die an die feste Klemmbacke 13 angrenzende, in der Regel kleinere Kammer 21 im Bodenbereich die durch die äußere Seitenwand führende, zum Eintauchen und Einrasten des an die schwenkbare Klemmbacke 14 angesetzten Querstegs 16 vorgesehene Öffnung 18 besitzen. Die andere Kammer 22 wird zweckmäßig als Dosierkammer im engeren Sinne ausgebildet.

Für das kindergesicherte Verschließen des Beutels 19 (Fig. 7) wird dieser in seinem oberen Bereich zusammengerafft und zwischen Meßbecher 12 und schwenkbarer Klemmbacke 14 gelegt. Dann wird letztere nach unten, d.h. in Richtung auf die feste Klemmbacke 13, gedrückt.

0057887

D 6315 EP     9

Dabei taucht der Quersteg 16 in die im Bodenbereich der kleineren Kammer 21 vorgesehene Aussparung bzw. Öffnung 18 ein und arretiert mit Hilfe der Nase 17 durch Einschnappen. Der Beutel 19 ist damit verschlossen, und der Meßbecher 12 bleibt Bestandteil des Beutelverschlusses. Zum Öffnen des letzteren wird der in die kleinere Kammer 21 des Meßbechers 12 eingedrückte Quersteg 16 durch Fingerdruck nach unten, d.h. radial nach außen in Bezug auf die Drehachse des Scharniers 4, so bewegt, daß die Arretierungsnase 17 ausgeklinkt wird und die angelenkte Klappe bzw. die schwenkbare Klemmbacke 14 abzuschwenken ist.

Die Kindersicherung besteht bei diesem Ausführungsbeispiel im wesentlichen darin, daß der mit einem Finger zu betätigende bzw. herabzudrückende Quersteg 16 durch einen Kinderfinger nicht zu erreichen ist. Natürlich muß aber der Abstand zwischen der oberen Öffnung 23 des Meßbechers 12 und dem Quersteg 16 so bemessen sein, daß er mit dem Finger einer Erwachsenenhand zu betätigen bzw. auszuklinken ist. Durch die Erfindung wird also ein Meßbecher mit integriertem kindergesicherten Beutelverschluß geschaffen. Dieser Meßbecher ermöglicht ein Dosieren des jeweiligen Produkts auf herkömmliche Weise und gewährleistet darüber hinaus ein kindergesichertes Verschließen eines Beutels und damit zugleich ein Aufbewahren des Bechers an einer für das Wiederfinden zum Gebrauch sehr günstigen Stelle. Die mit dem Meßbecher gekoppelte schwenkbare Klemmbacke 14 kann mit dem in ihrem unteren Bereich senkrecht zu ihr verlaufenden Quersteg 16 in einem Teil gespritzt werden. Zum Erzielen einer ausreichenden Materialelastizität am Scharnier 4 und am Quersteg 16 wird die Verwendung von elastischen Kunststoffen, wie Polypropylen, bevorzugt.

**0057887**

Patentanmeldung

HENKEL KGaA
ZR-FE/Patente

D 6315 EP                    10

Es kann zweckmäßig sein, die schwenkbare Klemmbacke 14 nach Fig. 5 und 8 mit über die Außenwände der angrenzenden Kammer 21 übergreifenden, insbesondere gezahnten, Randstreifen 24 zu versehen. Vorteilhaft erhält der Beutelverschluß nach Fig. 9 eine ein Ineinanderstapeln ermöglichende Formgebung der Kammern 21, 22 mit angesetzter Klammer bzw. Klemmbackenanordnung.

0057887

HENKEL KGaA
ZR-FE/Patente

D 6315 EP    11

## Bezugszeichenliste

| | | |
|---|---|---|
| 1 | = | Beutelverschluß, Klammern |
| 2, 3 | = | Klemmbacken |
| 4 | = | Scharnier |
| 5, 6 | = | Arretierung |
| 7, 8 | = | Kanten |
| 9 | = | Zähnung |
| 10 | = | Pfeil |
| 11 | = | Öffnungsrichtung |
| 12 | = | Meßbecher |
| 13 | = | feste Klemmbacke |
| 14 | = | schwenkbare Klemmbacke |
| 15 | = | freies Längsende von 14 |
| 16 | = | Quersteg |
| 17 | = | Arretiernase |
| 18 | = | Öffnung |
| 19 | = | Beutel |
| 20 | = | Trennwand |
| 21 | = | Kammer |
| 22 | = | Dosierkammer |
| 23 | = | obere Öffnung von 12 |
| 24 | = | Randstreifen von 14 |

**0057887**

HENKEL KGaA
ZR-FE/Patente

D 6315 EP                    12


P a t e n t a n s p r ü c h e


1. Beutelverschluß, bestehend aus einer auf den zusammengerafften Beutelhals zu setzenden Klammer (1) mit zwei zangenartig gegeneinander zu bewegenden sowie durch ein Scharnier (4) an einer Klammerschmalseite zusammengehaltenen Klemmbacken (2, 3; 13, 14), dadurch gekennzeichnet, daß die Klemmbacken (2, 3; 13, 14) mit Abstand von dem Scharnier (4) eine beim Schließen der Klammer (1) einrastende und durch Druck in einer etwa senkrecht zur Öffnungsrichtung (11) verlaufende Richtung (10) zu öffnende Arretierung (5, 6; 17, 18) aufweisen.

2. Beutelverschluß nach Anspruch 1, dadurch gekennzeichnet, daß die Klammer (1) langgestreckt ist und eine durch Druckausübung in Klammer-Längsrichtung zu öffnende Arretierung (5, 6; 17, 18) aufweist.

3. Beutelverschluß nach Anspruch 1 oder 2, dadurch gekennzeichnet, daß die Arretierung (5, 6; 17, 18) an dem dem Scharnier (4) gegenüberliegenden Ende der Klammer (1) vorgesehen ist.

4. Beutelverschluß nach einem oder mehreren der Ansprüche 1 bis 3, dadurch gekennzeichnet, daß die den Beutelhals erfassenden Klemmbacken (2, 3; 13, 14) einseitig oder doppelseitig gezähnte (9) Berührungskanten (7, 8) besitzen, wobei Ober- und Unterteil der Klammerkanten (7, 8) teilweise ineinandergreifen können.

5. Beutelverschluß nach einem oder mehreren der Ansprüche 1 bis 4, dadurch gekennzeichnet, daß die zum Öffnen der Arretierung (5, 6) zu umgreifende Länge der Klammer (1) die durchschnittliche Spannweite und/oder die dabei aufzubringende Kraft die durchschnittliche Kraft der Hand eines bis zu etwa vier Jahre alten Kindes übersteigt.

6. Beutelverschluß nach einem oder mehreren der Ansprüche 1 bis 5, dadurch gekennzeichnet, daß eine oder beide Backen (2, 3) als Schalen, insbesondere mit vorgegebenem Dosiervolumen, ausgebildet sind.

7. Beutelverschluß nach Anspruch 6, dadurch gekennzeichnet, daß die eine Klemmbacke (2, 3) als Schale und die andere als zugehöriger Griff ausgebildet ist.

8. Beutelverschluß nach einem oder mehreren der Ansprüche 1 bis 4, dadurch gekennzeichnet, daß die Außenseite der einen, festen Klemmbacke (13) ein Seitenwandteil eines Meßbechers (12) bildet und daß das Scharnier (4) im Bereich einer Kante der Becheröffnung (23) an den Meßbecher (12) angesetzt ist.

9. Beutelverschluß nach Anspruch 8, dadurch gekennzeichnet, daß der Meßbecher (12) zwei durch eine in etwa parallel zu der als feste Klemmbacke (13) ausgebildeten Seitenwand verlaufende Trennwand (20) abgeteilte Kammern (21, 22) aufweist und daß die an die feste Klemmbacke (13) angrenzende, insbesondere kleinere, Kammer (21) im Bodenbereich eine durch die äußere Seitenwand führende Öffnung (18) zum Eintauchen und Einrasten eines an die schwenkbare, andere Klemm-

D 6315 EP                    14

backe (14) angesetzten Querstegs (16) besitzt.

10. Beutelverschluß nach Anspruch 9, dadurch gekennzeichnet, daß die mit der Öffnung (18) für den Quersteg (16) ausgestattete Kammer (21) eine solche Weite und Tiefe besitzt, daß ein Finger eines bis zu etwa vier Jahren alten Kindes nicht an den im verschlossenen Zustand in die Kammer (21) hineinragenden Quersteg (16) heranreicht, aber der Quersteg (16) mit einem Finger einer Erwachsenenhand zu betätigen bzw. auszuklinken oder herabzudrücken ist.

11. Beutelverschluß nach einem oder mehreren der Ansprüche 8 bis 10, dadurch gekennzeichnet, daß die schwenkbare Klemmbacke (14) seitlich über die Außenwände der angrenzenden Kammer (21) übergreifende, insbesondere gezahnte, Randstreifen (24) besitzt.

12. Beutelverschluß nach einem oder mehreren der Ansprüche 8 bis 11, gekennzeichnet durch eine ein Ineinanderstapeln ermöglichende Formgebung der Kammern (21, 22) mit angesetzter schwenkbarer Backe (14).

Fig. 1

Fig. 2

Fig. 3

Fig. 4

Fig. 5

Fig. 7

Fig. 6

0057887

Fig. 8

22

20
24
21

Fig. 9

12

22

14
21
20

17
16